# FASCICULE DE BREVET EUROPEEN

(11) **EP 2 747 100 B1**
(45) Date de publication et mention de la délivrance du brevet: **29.08.2018**
(21) Numéro de dépôt: 13198112.8
(22) Date de dépôt: 18.12.2013
(51) Int. Cl.: H01G 2/14, H01G 4/015, H01G 2/18

(54) **Condensateur basse tension auto-protégé**
Ausfallsicherer Niederspannungskondensator
Self-protected low-voltage capacitor

(30) Priorité: 21.12.2012 FR 1262666
(43) Date de publication de la demande: 25.06.2014
(73) Titulaire: Schneider Electric Industries SAS, 92500 Rueil-Malmaison (FR)
(72) Inventeur: Dujeu, Olivier, 38420 Domene (FR); Guillermin, Christophe, 74330 Sillingy (FR)
(74) Mandataire: Lavoix

(56) Documents cités:
- EP-A1- 0 530 115
- DE-A1- 2 731 796
- GB-A- 1 578 212
- US-A- 4 150 419

## Description

La présente invention concerne un condensateur comprenant :
- une enceinte ;
- un matériau d'isolation contenu dans l'enceinte ;
- un dispositif capacitif comprenant deux couches conductrices et au moins une couche diélectrique formée d'un matériau diélectrique et interposée entre les deux couches conductrices ; et
- un dispositif de protection comprenant un mécanisme de déconnexion du dispositif capacitif en cas de surpression dans l'enceinte.

Plus précisément, l'invention concerne le domaine des condensateurs de puissance basse tension de type auto-cicatrisant.

Par « condensateur de type auto-cicatrisant », on entend un condensateur comportant au moins un dispositif capacitif logé dans une enceinte et formé par un enroulement de deux complexes comprenant chacun une couche conductrice et une couche diélectrique. Chaque couche conductrice forme une électrode. Chaque complexe est obtenu par métallisation d'une face d'un film diélectrique.

Lorsqu'un défaut mineur apparaît dans un tel condensateur, un claquage localisé se forme et conduit à l'évaporation d'une électrode au voisinage du défaut, sans dommage pour le film adjacent. Le claquage localisé provoque une évaporation de l'électrode au point de claquage et, de ce fait, une isolation de cette zone en défaut. L'enroulement conserve son isolation et la perte de capacité, due à l'évaporation ponctuelle de l'électrode, est négligeable.

Lors de sollicitations anormales, notamment en cas de surtensions ou d'élévation de température, un claquage diélectrique peut détériorer la qualité d'auto-cicatrisation du condensateur. L'augmentation résultante du courant qui traverse l'enroulement provoque une augmentation de température au voisinage du défaut et une production de gaz due à la décomposition du film diélectrique. L'enceinte dans laquelle est disposé l'enroulement peut alors éclater sous l'effet de la pression produite par le gaz.

Pour pallier ce problème, les condensateurs auto-cicatrisants comprennent, de façon classique, un dispositif de protection comprenant un mécanisme de déconnexion de l'enroulement en cas de surpression dans l'enceinte.

A titre d'exemple, le brevet FR 2 598 024 décrit un condensateur comprenant un tel dispositif de protection. Le dispositif de protection comprend une membrane déformable appartenant à la paroi de l'enceinte et susceptible de se déformer lors d'une surpression due à un défaut interne de l'enroulement dans l'enceinte. Il comporte, en outre, un contact dont la fermeture est provoquée par la déformation de la membrane pour mettre en court-circuit l'enroulement et éviter ainsi toute détérioration physique de l'enceinte.

Toutefois, certains défauts internes peuvent apparaître sans générer de gaz ou en générant du gaz en faible quantité ou à une vitesse très lente. C'est le cas notamment des défauts impédants évoluant lentement. Le dispositif de protection ne voit pas ces défauts internes du fait de l'absence ou de la faible vitesse de génération de gaz et peut par conséquent ne pas être activé. En outre, certains défauts très localisés peuvent rompre l'enceinte avant que les gaz générés par le défaut interne ne soient visibles par le système de protection.

On connaît le document GB 1 578 212 A qui décrit un condensateur comprenant une enceinte, un enroulement de papier qui brûle en cas de surcharge du condensateur, un enroulement capacitif et un dispositif de protection avec un mécanisme de déconnexion.

L'invention a pour objectif de fournir un condensateur basse tension de type auto-cicatrisant comprenant un dispositif de protection fonctionnant même dans les cas de l'apparition de défauts ne générant pas ou peu de gaz.

A cet effet, l'invention a pour objet un condensateur selon la revendication 1.

Selon des modes de réalisation particuliers, le condensateur selon l'invention est selon l'une quelconque des revendications 2 à 10.

L'invention sera mieux comprise à la lecture de la description qui va suivre, donnée uniquement à titre d'exemple et faite en se référant aux dessins annexés sur lesquels :
- la figure 1 est une représentation schématique d'un condensateur selon un premier mode de réalisation de l'invention dans lequel le dispositif de protection n'est pas activé ;
- la figure 2 est une représentation schématique d'un condensateur selon le premier mode de réalisation de l'invention dans lequel le dispositif de protection est activé ;
- la figure 3 est une représentation schématique d'un enroulement d'un condensateur selon l'invention ;
- la figure 4 est une représentation schématique d'un condensateur selon un second mode de réalisation de l'invention dans lequel le dispositif de protection n'est pas activé.

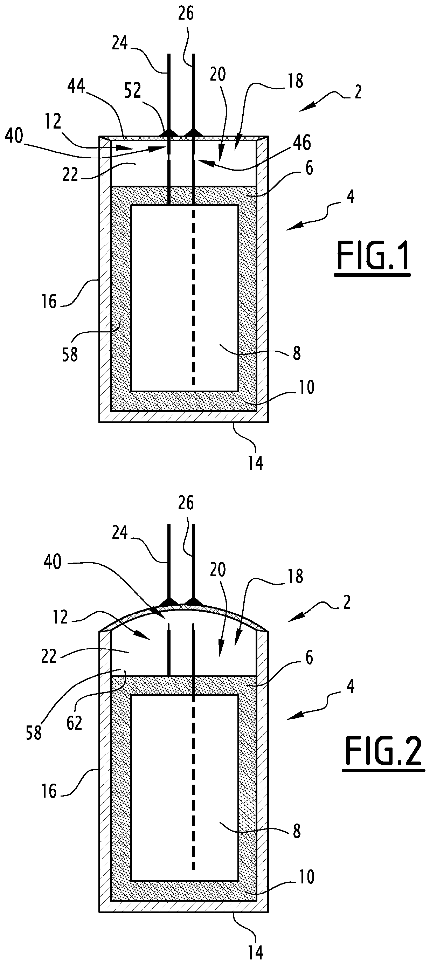

En référence aux figures 1 et 2, le condensateur 2 comprend une enceinte 4, un matériau d'isolation 6 et un dispositif capacitif 8. L'enceinte 4 délimite un volume intérieur 10, le matériau d'isolation 6 et le dispositif capacitif 8 sont contenus dans le volume intérieur 10 de l'enceinte 4.

Le condensateur 2 comprend en outre un dispositif de protection 12.

L'enceinte 4 comporte une paroi de fond 14, une paroi latérale 16 et un capot 18. La paroi latérale 16 est tubulaire et fermée à ses extrémités par la paroi de fond 14 et le capot 18.

Le capot 18 comprend un espace intérieur 20 et est destiné d'une part à fermer de manière étanche l'enceinte 4 et d'autre part à loger le dispositif de protection 12. Le capot 18 est disposé à l'opposé de la paroi de fond 14.

Ainsi, le volume intérieur 10 de l'enceinte 4 est délimité latéralement par la paroi latérale 16 et à ses extrémités par la paroi de fond 14 et par le capot 18.

L'enceinte 4 présente, par exemple, une forme sensiblement cylindrique.

De préférence, elle est formée par un matériau métallique. En variante, l'enceinte 4 est formée par un matériau plastique. Elle reçoit le matériau d'isolation 6 et le dispositif capacitif 8 dans le volume intérieur 10 de manière étanche, en particulier au gaz.

Le matériau d'isolation 6 est contenu dans le volume intérieur 10 de l'enceinte 4, et enrobe de manière étanche le dispositif capacitif 8. Il est, de préférence, formé par une résine, telle que du polyuréthane. En variante, le matériau d'isolation 6 est formé par de l'huile. Le matériau d'isolation 6 remplit partiellement le volume intérieur 10.

Le volume intérieur 10 de l'enceinte 4 comprend une cavité 22 située entre le capot 18 et l'espace occupé par le matériau d'isolation 6 et le dispositif capacitif 8.

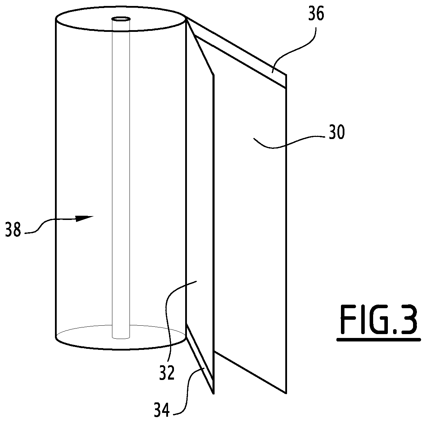

Comme visible sur la figure 3, le dispositif capacitif 8 comprend deux couches conductrices 30, 32 définissant chacune une électrode et séparées par au moins une couche diélectrique 34 formée par un matériau diélectrique. La couche diélectrique 34 est ainsi interposée entre les deux couches conductrices 30, 32.

De préférence, le dispositif capacitif 8 est formé de deux couches conductrices 30, 32 et de deux couches diélectriques 34, 36 superposées en alternance. Le dispositif capacitif est par exemple formé de deux couches diélectriques 34, 36, chacune munie d'un revêtement métallique 30, 32 et superposées et enroulées pour former un enroulement 38.

Chaque revêtement métallique 30, 32 forme respectivement une électrode.

Chaque revêtement métallique 30, 32 présente une épaisseur comprise entre 5 et 100 nm, de préférence comprise entre 15 et 40 nm, et est avantageusement formée par de l'aluminium, du zinc, ou un alliage aluminium-zinc.

De préférence, chaque couche diélectrique 34, 36 est formée par du polypropylène ou du polyester.

Chaque couche diélectrique 34, 36 présente une épaisseur comprise entre 3 et 15 µm.

L'enroulement 38 est avantageusement auto-cicatrisant. Le condensateur 2 selon l'invention forme donc un condensateur 2 de type auto-cicatrisant.

Le dispositif de protection 12 est disposé dans l'espace intérieur 20 du capot 18 de l'enceinte 4.

En référence aux figures 1 et 2, le dispositif de protection 12 comprend un mécanisme de déconnexion 40 du dispositif capacitif 8 en cas de surpression dans l'enceinte 4.

Le condensateur comprend au moins deux conducteurs électriques connectés au dispositif capacitif 8. Le condensateur 2 comprend par exemple et comme représenté sur les figures 1 et 2, deux conducteurs électriques 24, 26. En variante, le condensateur 2 est un condensateur triphasé et comprend trois conducteurs électriques connectés à trois enroulements capacitifs composés de deux couches diélectriques chacune munie d'un revêtement métallique.

Chaque conducteur électrique comprend une zone de rupture 46.

Dans les modes de réalisation représentés sur les figures 1, 2 et 4, la zone de rupture 46 est une zone frangible formée par un amincissement du conducteur électrique 24, 26.

En variante, chaque conducteur électrique est formé par deux parties connectées entre elles au niveau de la zone de rupture 46, par l'intermédiaire d'un point de soudure ou par brasage.

Le dispositif de protection 12 comporte une membrane 44. La membrane 44 s'étend suivant une direction sensiblement perpendiculairement à la direction d'extension des conducteurs électriques 24, 26. Les conducteurs électriques 24, 26 traversent avantageusement la membrane 44 et sont chacun reliés à la membrane 44 par exemple par un point de soudure 52.

La membrane 44 est déformable et propre se déformer sous l'effet d'une surpression dans l'enceinte 4, de manière à provoquer une déconnexion entre au moins un des conducteurs électriques 24, 26 et le dispositif capacitif 8. La déconnexion entre au moins un des conducteurs électriques 24, 26, et le dispositif capacitif 8 s'effectue au niveau de la zone de rupture 46.

En référence aux figures 1 et 2, le condensateur 2 comprend, dans le volume intérieur 10 de l'enceinte 4, un matériau de dégazage 58 solide ou liquide et propre à libérer du gaz à une température de dégazage Tgaz inférieure à la température de décomposition du matériau diélectrique. La présence du matériau de dégazage 58 est destinée à permettre une augmentation rapide en pression dans l'enceinte lorsque la température de l'enceinte 4 atteint la température de dégazage Tgaz.

Par température de dégazage, on entend la température minimale à partir de laquelle des composés du matériau de dégazage s'évaporent. Plus précisément, la température de dégazage Tgaz est la température à laquelle le composé du matériau de dégazage ayant la température d'évaporation la plus basse commence à s'évaporer.

Par température de décomposition, on entend la température minimale à partir de laquelle des composés du matériau diélectrique constituant les couches diélectriques s'évaporent. Plus précisément, la température de décomposition est la température à laquelle le composé du matériau diélectrique ayant la température d'évaporation la plus basse commence à s'évaporer.

Dans l'exemple où le matériau diélectrique est formé par du polypropylène, la température de décomposition est supérieure ou égale à 350°C.

Le matériau de dégazage 58 est par exemple formé par de l'hydroxyde d'aluminium.

De manière avantageuse, le matériau de dégazage 58 est incorporé dans le matériau d'isolation 6 dans le volume intérieur 10 de l'enceinte 4, comme représenté sur les figures 1 et 2. L'incorporation du matériau de dégazage 58 dans le matériau d'isolation 6 présente l'avantage d'être facile à réaliser.

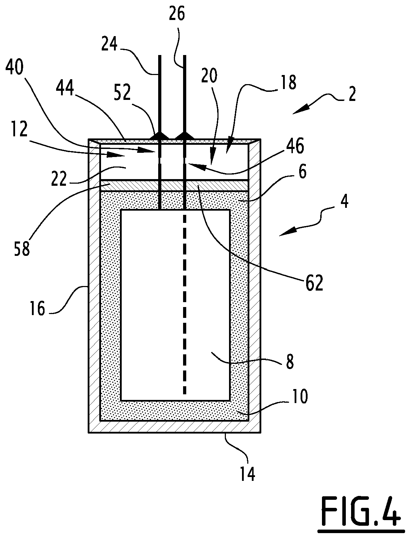

En variante et comme représenté sur la figure 4, le matériau de dégazage 58 forme une couche de dégazage 62 disposée entre le matériau d'isolation 6 et le dispositif de protection 12. La couche de dégazage 62 est par exemple accolée au matériau d'isolation 6. Ce mode de réalisation permet une activation efficace du mécanisme de déconnexion 40.

De manière avantageuse également, la température de dégazage Tgaz est inférieure à 350°C. De préférence, la température de dégazage Tgaz est comprise entre 150°C et 300°C, de préférence comprise entre 200 et 300°C et en particulier égale à 220°C.

Le matériau de dégazage 58 présente avantageusement une température de dégazage Tgaz supérieure à 120°C, afin de ne pas activer le mécanisme de déconnexion 40 du dispositif de protection 12 pendant le fonctionnement normal du condensateur 2.

Avantageusement, le condensateur 2 comprend en outre un intervalle de passage du gaz ménagé entre la paroi latérale 16 de l'enceinte 4 et le dispositif capacitif 8 de façon à faciliter le cheminement du gaz vers le dispositif de protection 12.

En fonctionnement normal du condensateur 2, c'est-à-dire lorsque le dispositif capacitif 8 ne présente pas de défaut où lorsque la fonction d'auto-cicatrisation du dispositif capacitif 8 agit, le mécanisme de déconnexion 40 du dispositif de protection 12 n'est pas activé, comme visible sur les figures 1 et 4. En fonctionnement normal, les conducteurs 24, 26 sont connectés au dispositif capacitif 8.

Lorsqu'un défaut interne lent apparaît dans le dispositif capacitif 8 et que la fonction d'auto-cicatrisation du dispositif capacitif 8 n'agit plus, par exemple dans le cas où le condensateur 2 est en fin de vie, la température augmente dans l'enceinte 4 jusqu'à atteindre la température de dégazage Tgaz. Le matériau diélectrique, par exemple le polypropylène est alors à l'état solide ou liquide, car la température dans l'enceinte 4 est, à cet instant, égale à la température de dégazage Tgaz, elle-même inférieure à la température de décomposition du matériau diélectrique. A partir de cet instant, le matériau de dégazage 58, par exemple l'hydroxyde d'aluminium, commence à s'évaporer et donc à générer du gaz. Une surpression apparaît alors dans l'enceinte 4 et la membrane 44, du fait de cette surpression, se déforme.

En se déformant, elle exerce une traction sur les conducteurs électriques 24, 26 et provoque la rupture des conducteurs électriques 24, 26 au niveau de la zone de rupture 46, comme visible sur la figure 2.

La température de dégazage Tgaz étant inférieure à la température de décomposition du matériau diélectrique, le mécanisme de déconnexion 40 est activé même lorsque le défaut interne situé dans l'enroulement 38 ne génère pas assez de gaz pour permettre la déformation de la membrane 44 et la déconnexion du dispositif capacitif 8.

La présence d'hydroxyde d'aluminium dans l'enceinte 4 permet d'assurer une augmentation en pression rapide et suffisante pour activer le mécanisme de déconnexion de manière plus sûre et plus fiable et donc préserver l'intégrité physique de l'enceinte du condensateur 2, notamment lorsque la fonction d'auto-cicatrisation du condensateur 2 n'agit plus de manière satisfaisante.

En variante, le condensateur comprend d'autres types de dispositif de protection. Le dispositif de protection comprend par exemple un mécanisme de mise en court-circuit et un fusible connecté en série du dispositif capacitif, tel que décrit par exemple dans FR 2 959 588.

## Revendications

1. Condensateur (2) comprenant :
- une enceinte (4) ;
- un matériau d'isolation (6) contenu dans l'enceinte (4) ;
- un dispositif capacitif (8) comprenant deux couches conductrices (30, 32) et au moins une couche diélectrique (34, 36) formée d'un matériau diélectrique et interposée entre les deux couches conductrices (30, 32) ; et
- un dispositif de protection (12) comprenant un mécanisme de déconnexion (40) du dispositif capacitif (8) en cas de surpression dans l'enceinte (4) ;
comprenant en outre, à l'intérieur de l'enceinte (4), un matériau de dégazage (58) propre à libérer du gaz à une température de dégazage (Tgaz) inférieure à la température de décomposition du matériau diélectrique pour générer une surpression dans l'enceinte (4) ;
**caractérisé en ce que** le matériau de dégazage (58) est formé par de l'hydroxyde d'aluminium.

2. Condensateur (2) selon la revendication 1, **caractérisé en ce que** le matériau de dégazage (58) est incorporé dans le matériau d'isolation (6).

3. Condensateur (2) selon la revendication 1, **caractérisé en ce que** le matériau de dégazage (58) forme une couche de dégazage (62) disposée entre le matériau d'isolation (6) et le dispositif de protection (12).

4. Condensateur (2) selon l'une quelconque des revendications précédentes, **caractérisé en ce que** le matériau d'isolation (6) enrobe de manière étanche le dispositif capacitif (8).

5. Condensateur (2) selon l'une quelconque des revendications précédentes, **caractérisé en ce que** le matériau diélectrique est formé par du polypropylène.

6. Condensateur (2) selon l'une quelconque des revendications précédentes, **caractérisé en ce que** la température de dégazage (Tgaz) est inférieure à 350°C.

7. Condensateur (2) selon la revendication 6, **caractérisé en ce que** la température de dégazage (Tgaz) est comprise entre 150 et 300°C.

8. Condensateur (2) selon l'une quelconque des revendications précédentes, **caractérisé en ce que** le dispositif capacitif (8) comprend deux couches conductrices (30, 32) et deux couches diélectriques (34, 36) superposées en alternance, le dispositif capacitif (8) étant enroulé pour former un enroulement (38).

9. Condensateur (2) selon l'une quelconque des revendications précédentes, **caractérisé en ce qu'**il comprend au moins deux conducteurs électriques (24, 26) connectés au dispositif capacitif (8), **en ce que** le dispositif de protection (12) comporte une membrane (44) déformable et propre se déformer sous l'effet d'une surpression dans l'enceinte (4), de manière à provoquer une déconnexion entre au moins un des conducteurs électriques (24, 26) et le dispositif capacitif (8).

10. Condensateur (2) selon la revendication 9, **caractérisé en ce que** l'enceinte comporte une paroi latérale (16), et **en ce qu'**un intervalle de passage du gaz est ménagé entre la paroi latérale (16) de l'enceinte (4) et le dispositif capacitif (8) de façon à faciliter le cheminement du gaz vers la membrane (44).

## Patentansprüche

1. Kondensator (2), aufweisend:
- ein Gehäuse (4),
- ein Isolationsmaterial (6), das in dem Gehäuse (4) enthalten ist,
- eine kapazitive Vorrichtung (8), die zwei leitfähige Schichten (30, 32) und mindestens eine dielektrische Schicht (34, 36) aufweist, die aus einem dielektrischen Material gebildet ist und zwischen den beiden leitfähigen Schichten (30, 32) angeordnet ist, und
- eine Schutzvorrichtung (12), die einen Mechanismus zum Trennen (40) der kapazitiven Vorrichtung (8) im Fall eines Überdrucks in dem Gehäuse (4) aufweist,
ferner im Inneren des Gehäuses (4) ein Entgasungsmaterial (58) aufweisend, das in der Lage ist, Gas bei einer Entgasungstemperatur (Tgaz), die kleiner als die Zersetzungstemperatur des dielektrischen Materials ist, freizusetzen, um in dem Gehäuse (4) einen Überdruck zu erzeugen,
**dadurch gekennzeichnet, dass** das Entgasungsmaterial (58) aus Aluminiumhydroxid gebildet ist.

2. Kondensator (2) gemäß Anspruch 1, **dadurch gekennzeichnet, dass** das Entgasungsmaterial (58) in das Isolationsmaterial (6) integriert ist.

3. Kondensator (2) gemäß Anspruch 1, **dadurch gekennzeichnet, dass** das Entgasungsmaterial (58) eine Entgasungsschicht (62) ausbildet, die zwischen dem Isolationsmaterial (6) und der Schutzvorrichtung (12) angeordnet ist.

4. Kondensator (2) gemäß irgendeinem der vorhergehenden Ansprüche, **dadurch gekennzeichnet, dass** das Isolationsmaterial (6) die kapazitive Vorrichtung (8) auf dichte Weise umhüllt.

5. Kondensator (2) gemäß irgendeinem der vorhergehenden Ansprüche, **dadurch gekennzeichnet, dass** das dielektrische Material aus Polypropylen gebildet ist.

6. Kondensator (2) gemäß irgendeinem der vorhergehenden Ansprüche, **dadurch gekennzeichnet, dass** die Entgasungstemperatur (Tgaz) kleiner als 350°C ist.

7. Kondensator (2) gemäß Anspruch 6, **dadurch gekennzeichnet, dass** die Entgasungstemperatur (Tgaz) zwischen 150 und 300°C liegt.

8. Kondensator (2) gemäß irgendeinem der vorhergehenden Ansprüche, **dadurch gekennzeichnet, dass** die kapazitive Vorrichtung (8) zwei leitfähige Schichten (30, 32) und zwei dielektrische Schichten (34, 36) aufweist, die abwechselnd übereinander angeordnet sind, wobei die kapazitive Vorrichtung (8) aufgewickelt ist, um eine Wicklung (38) auszubilden.

9. Kondensator (2) gemäß irgendeinem der vorhergehenden Ansprüche, **dadurch gekennzeichnet, dass** er mindestens zwei elektrische Leiter (24, 26) aufweist, die mit der kapazitiven Vorrichtung (8) verbunden sind, dass die Schutzvorrichtung (12) eine Membran (44) aufweist, die verformbar ist und in der Lage ist, sich unter der Wirkung eines Überdrucks in dem Gehäuse (4) zu verformen, um eine Trennung zwischen mindestens einem der elektrischen Leiter (24,26) und der kapazitiven Vorrichtung (8) zu verursachen.

10. Kondensator (2) gemäß Anspruch 9, **dadurch gekennzeichnet, dass** das Gehäuse eine Seitenwand (16) aufweist und dass ein Zwischenraum zum Hindurchströmen des Gases zwischen der Seitenwand (16) des Gehäuses (4) und der kapazitiven Vorrichtung (8) eingerichtet ist, um das Strömen des Gases in Richtung zu der Membran (44) zu erleichtern.

## Claims

1. A capacitor (2) comprising:
- an enclosure (4);
- an insulating material (6) contained in the enclosure (4);
- a capacitive device (8) comprising two conductive layers (30, 32) and at least one dielectric layer formed from a dielectric material and inserted between the two conductive layers (30, 32); and
- a protection device (12) comprising a mechanism (40) for disconnecting the capacitive device (8) in case of overpressure in the enclosure;
further comprising, inside the enclosure (4), a degassing material (58) capable of releasing gas at a degassing temperature (Tgaz) below the decomposition temperature of the dielectric material to generate an overpressure in the enclosure (4),
**characterized in that** the degassing material (58) is formed by aluminum hydroxide.

2. The capacitor (2) according to claim 1, **characterized in that** the degassing material (58) is incorporated into the insulating material (6).

3. The capacitor (2) according to claim 1, **characterized in that** the degassing material (58) forms a degassing layer (62) positioned between the insulating material (6) and the protective device (12).

4. The capacitor (2) according to any one of the preceding claims, **characterized in that** the insulating material (6) sealably coats the capacitive device (8).

5. The capacitor (2) according to any one of the preceding claims, **characterized in that** the dielectric material is formed by polypropylene.

6. The capacitor (2) according to any one of the preceding claims, **characterized in that** the degassing temperature (Tgaz) is below 350°C.

7. The capacitor (2) according to claim 6, **characterized in that** the degassing temperature (Tgaz) is comprised between 150 and 300°C.

8. The capacitor (2) according to any one of the preceding claims, **characterized in that** the capacitive device (8) comprises two conductive layers (30, 32) and two dielectric layers (34, 36) that are superimposed in an alternated manner, the capacitive device (8) being wound to form a winding (38).

9. The capacitor (2) according to any one of the preceding claims, **characterized in that** it comprises at least two electrical conductors (24, 26) connected to the capacitive device (8), wherein the protective device (12) includes a deformable membrane (44) capable of deforming under the effect of an overpressure in the enclosure (4), so as to cause a disconnection between at least one of the electrical conductors (24, 26) and the capacitive device (8).

10. The capacitor (2) according to claim 9, **characterized in that** the enclosure includes a side wall (16), and **in that** a passage interval for the gas is formed between the side wall (16) of the enclosure (4) and the capacitive device (8) so as to facilitate the conveyance of the gas toward the membrane (44).
